(19) Europäisches Patentamt
European Patent Office
Office européen des brevets

(11) **EP 2 641 067 B1**

(12) **FASCICULE DE BREVET EUROPEEN**

(45) Date de publication et mention
de la délivrance du brevet:
**13.01.2016 Bulletin 2016/02**

(21) Numéro de dépôt: **11794814.1**

(22) Date de dépôt: **14.11.2011**

(51) Int Cl.:
***G01H 3/12*** *(2006.01)* ***A45D 20/12*** *(2006.01)*

(86) Numéro de dépôt international:
**PCT/FR2011/052634**

(87) Numéro de publication internationale:
**WO 2012/066224 (24.05.2012 Gazette 2012/21)**

(54) **PROCEDE DE MESURE DU BRUIT D'UN SECHE-CHEVEUX**

VERFAHREN ZUR MESSUNG DES GERÄUSCHPEGELS EINES HAARTROCKNERS

METHOD OF MEASURING THE NOISE OF A HAIRDRYER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.11.2010 FR 1059345**

(43) Date de publication de la demande:
**25.09.2013 Bulletin 2013/39**

(73) Titulaire: **SEB S.A.
69130 Ecully (FR)**

(72) Inventeurs:
• **LINGLIN, Benoît
F-74350 Cruseilles (FR)**
• **MANDICA, Franck
F-69340 Francheville (FR)**

(74) Mandataire: **Guéry-Jacques, Géraldine
SEB Développement
Service Propriété Industrielle
Les 4 M -
Chemin du Petit Bois - B.P. 172
69134 Écully Cedex (FR)**

(56) Documents cités:
**EP-A1- 1 692 962      JP-A- 11 142 231
US-A1- 2002 183 947**

## Description

Domaine technique de l'invention

La présente invention concerne le domaine technique des sèche-cheveux et, plus particulièrement, des sèche-cheveux électriques à main utilisés par les professionnels et/ou les particuliers.

Etat de la technique antérieure :

Un sèche-cheveux à main comprend généralement un corps tubulaire allongé qui contient un groupe moto-ventilateur formé d'une hélice solidaire de l'arbre d'entraînement d'un moteur électrique. Le moteur électrique est maintenu dans le corps tubulaire par des bras rigides qui assurent le centrage de l'hélice par rapport à la paroi interne du corps tubulaire. Le plus souvent le corps tubulaire est équipé d'une poignée comprenant un cordon de raccordement au réseau électrique ainsi que des organes de commande du fonctionnement du moteur électrique. Pendant le fonctionnement du sèche-cheveux, le groupe moto ventilateur aspire de l'air par une entrée située à l'arrière du corps tubulaire pour le refouler par une sortie située à l'avant de ce dernier. Le sèche-cheveux comprend aussi, le plus souvent, en aval de l'hélice des moyens de chauffage électrique de l'air soufflé.

Un tel sèche-cheveux donne satisfaction en ce qui concerne sa fonction première de séchage des cheveux. Toutefois les sèche-cheveux connus présentent l'inconvénient d'être particulièrement bruyants ce qui induit une fatigue lors de leur usage prolongé par un professionnel ou encore une nuisance pour l'utilisateur et son entourage.

Il est donc apparu le besoin d'un nouveau type de sèche-cheveux qui possède des performances de chauffage et de débit d'air analogues à celles des sèche-cheveux selon l'art antérieur tout en induisant une nuisance sonore moindre.

Le sèche-cheveux selon l'invention présente, à performances équivalentes voire supérieures, une nuisance sonore inférieure à celle des sèche-cheveux selon l'art antérieur. Mais pour résoudre ce problème de réduction de bruit, de nombreuses autres solutions sont proposées sur les appareils et il est difficile de pouvoir comparer les performances associées aux différents appareils.

Afin de quantifier de manière objective le bruit émis par un sèche-cheveux en fonctionnement et notamment vis-à-vis de la personne dont les cheveux sont séchés au moyen du sèche-cheveux, il est apparu le besoin d'un protocole de mesures fournissant des données objectives selon un mode opératoire reproductible permettant d'effectuer des comparaisons pertinentes entre différents sèche-cheveux.

A titre d'exemple, EP 1 692 962 A1 présente une méthode d'évaluation du bruit généré par un sèche-cheveux grâce à l'analyse de la puissance acoustique produite en fonction de la fréquence de rotation de la turbine du sèche-cheveux.

Exposé de l'invention:

Afin d'atteindre cet objectif, l'invention concerne un procédé d'évaluation du bruit émis par un sèche-cheveux d'axe longitudinal $\Delta$ avec une sortie vers l'avant, procédé comprenant les étapes suivantes :

- mise en oeuvre d'une tête humaine factice avec deux microphones, l'un placé au niveau de l'oreille gauche et l'autre au niveau de l'oreille droite de la tête factice de chaque côté du plan sagittal S, de symétrie de la tête,
- placement du sèche-cheveux en fonctionnement d'un côté arrière de la tête avec la sortie orientée vers la tête et située à une distance D de la tête comprise entre 5 cm et 20cm, l'axe longitudinal du sèche-cheveux étant compris dans un plan vertical V faisant un angle a compris entre 30° et 50° avec le plan sagittal S, de symétrie de la tête, et :

  - positionnement de l'axe longitudinal du sèche-cheveux dans un plan horizontal H passant par les micros, puis mesure de la pression acoustique gauche et droite par les microphones et calcul de la moyenne dB1 de ces deux mesures,
  - positionnement de l'axe longitudinal du sèche-cheveux avec la sortie orientée vers le bas, dans un plan incliné P faisant avec le plan horizontal un angle $\beta$ compris entre 30° et 50°, puis mesure de la pression acoustique gauche et droite par les microphones et calcul de la moyenne dB2 de ces deux mesures.

La réalisation de ces deux mesures permet d'obtenir une première indication objective du bruit émis par le sèche-cheveux. Ces mesures sont pertinentes notamment si l'on considère que le sèche-cheveux émet du bruit de façon symétrique autour de son axe longitudinal.

Afin d'affiner les mesures et notamment de tenir compte des éventuelles dissymétries d'émission du bruit, le procédé comprend en outre, selon une variante de mise en oeuvre, les étapes suivantes :

- placement du sèche-cheveux en fonctionnement de l'autre côté arrière de la tête avec la sortie orientée vers la tête et située à la distance D de la tête, l'axe longitudinal du sèche-cheveux étant compris dans un plan vertical V' symétrique du plan V par rapport au plan sagittal S, de symétrie de la tête T:

  - positionnement de l'axe longitudinal du sèche-cheveux dans le plan horizontal H puis mesure de la pression acoustique gauche et droite par les microphones et calcul de la moyenne dB3 de ces deux mesures,

- positionnement de l'axe longitudinal du sèche-cheveux avec la sortie orientée vers le bas, dans le plan incliné P puis mesure de la pression acoustique gauche et droite par les microphones et calcul de la moyenne dB4 de ces deux mesures.

Selon une caractéristique de mise en oeuvre, le procédé comprend une étape de calcul de la moyenne des valeurs dB1 et dB2 ou de la moyenne de dB1, dB2, dB3 et dB4.

Selon une autre caractéristique de mise en oeuvre visant à quantifier les nuisances pour un utilisateur du sèche-cheveux séchant les cheveux d'une autre personne, le procédé d'évaluation, conforme à l'invention, comprend une étape de mesure de la pression acoustique dB5 en un point situé sur l'axe longitudinal à l'arrière du sèche-cheveux à une distance D' comprise entre 15 cm et 30 cm.

À cet effet l'invention concerne également un sèche-cheveux comprenant :

- un corps tubulaire allongé d'axe longitudinal Δ qui est ouvert à une extrémité dite de sortie et qui comprend à proximité d'une extrémité arrière, opposée à la sortie, une entrée d'air,
- un groupe moto-ventilateur disposé dans le corps tubulaire entre l'entrée et la sortie et qui comprend un moteur électrique entrainant en rotation, selon un axe parallèle ou confondu avec l'axe Δ, un rotor situé dans une chambre de travail et adapté pour aspirer l'air par l'entrée et le refouler par la sortie, le moteur étant situé en aval du rotor selon le sens de circulation de l'air.

Selon l'invention, l'entrée d'air est périphérique à l'axe longitudinal Δ et le rotor forme un ventilateur centrifuge adapté pour aspirer l'air dans la chambre de travail parallèlement à l'axe longitudinal Δ et refouler l'air perpendiculairement à l'axe longitudinal.

La mise en oeuvre d'un tel ventilateur centrifuge permet d'obtenir, à encombrement équivalent, une pression interne élevée avec un débit d'air analogue à celui d'un ventilateur à hélice ou hélicoïde avec une vitesse de rotation moindre et donc un bruit généré par le moteur et le rotor moins important. On entend que l'entrée périphérique du corps tubulaire est agencée latéralement au corps et non à l'arrière du corps. L'agencement de l'entrée d'air périphérique - et non arrière au tube- associée au ventilateur centrifuge permet de réduire le bruit relativement aux oreilles de l'utilisateur car cette association permet de diminuer de quelques décibels le bruit produit en région arrière du sèche-cheveux pour le localiser sur des régions plus éparses autour du sèche-cheveux. L'entrée d'air n'est pas -même partiellement- dans l'axe longitudinal Δ ; préférentiellement l'entrée d'air est exclusivement périphérique, formant une ou des ouvertures au moins partiellement sur la périphérique, voire une ouverture complète sur 360°.

Selon l'invention, le rotor peut être réalisé de différentes manières et, par exemple, comprendre qu'un seul moyeu à partir duquel s'étendent des branches radiales supportant des aubes. Selon une forme préférée de réalisation de l'invention, le rotor comprend un plateau d'entrainement d'axe Δ supportant des aubes qui sont liées au plateau par leur tranche et qui s'étendent depuis une région centrale du plateau jusqu'à au moins un bord périphérique extérieur du plateau. Cette forme de réalisation présente l'avantage de permettre une bonne canalisation de l'air dans la chambre de travail, le plateau formant le plancher de cette dernière. Ainsi, il n'est pas nécessaire de prévoir une cloison de séparation fixe entre le moteur et la chambre de travail.

Selon une variante de cette forme préférée de réalisation, le rotor comprend moins de neuf aubes et de préférence sept aubes. En effet, les inventeurs ont eu le mérite de mettre en évidence qu'au delà de huit aubes le ventilateur engendre plus de bruit tout en présentant un débit inférieur à celui obtenu avec moins d'aubes. Il est en outre apparu qu'un nombre de sept aubes permettait d'obtenir un compromis débit/bruit optimal pour des vitesses de rotation comprises entre 7000 et 12 000 tr/min.

Selon une autre variante de cette forme préférée de réalisation et afin d'optimiser encore le fonctionnement du ventilateur, les aubes présentent une hauteur, mesurée parallèlement à l'axe Δ, comprise entre 0,3 et 0,5 fois le diamètre du rotor. Ainsi, lorsque le ventilateur présente un diamètre de l'ordre de 65 mm, les aubes pourront, par exemple, présenter une hauteur mesurée parallèlement à l'axe Δ comprise entre 20 mm et 30 mm. Préférentiellement la hauteur mesurée parallèlement à l'axe Δ est comprise entre 22 voire 25 mm et 30 mm. L'effet recherché de diminution de bruit est présent car la surface des aubes est modifiée, les inventeurs ayant préféré modifier la hauteur des aubes plutôt que leur largeur. Ils ont en effet constaté que modifier la largueur des aubes sans remettre en cause les moteurs à bas coût et sans ajouter de roulement additionnel couteux a pour conséquence d'augmenter les effets de balourd non souhaités dans le sèche-cheveux.

Selon encore une autre variante de cette forme de réalisation préférée, chaque aube présente, entre un bord d'attaque interne et un bord de fuite externe, une corde qui forme, avec un plan radial tangent au bord d'attaque, un angle négatif non nul, le sens positif correspondant au sens de rotation du rotor lors du fonctionnement normal du sèche-cheveux. Cette variante de réalisation permet de former un ventilateur centrifuge dit « à réaction » permettant d'obtenir des pressions de sortie plus importantes que si les aubes avaient une configuration droite radiale. L'augmentation de la pression en sortie de la chambre de travail permet d'obtenir un débit du ventilateur moins sensible aux pertes de charge induites par les obstacles situés en aval de la chambre de travail tels que par exemple des ailettes de redressement et de canalisation du flux d'air, des moyens de chauffage électrique de l'air soufflé ou encore une buse pour le coiffage.

Selon une variante, de la forme de réalisation préférée, visant à optimiser l'écoulement de l'air, le rotor comprend, à l'opposé du plateau, un plafond annulaire qui est solidaire des aubes et qui définit en son centre une bouche circulaire d'aspiration. Un tel plafond annulaire évite des phénomènes de recirculation de l'air au niveau de la tranche des aubes située à l'opposé du plateau d'entraînement.

Dans le cadre de cette variante, le rotor possède un diamètre externe maximal De et la bouche d'aspiration un diamètre interne Da qui pourront vérifier la relation suivante : $\dfrac{Da}{De} \geq 0{,}6$ , afin de garantir un débit et une pression optimaux.

Selon une caractéristique de la forme de réalisation préférée, le rotor possède un diamètre externe maximal De $\leq$ 65mm.

Selon une autre variante de la forme de réalisation préférée, le moteur possède une vitesse de rotation inférieure ou égale à 10 000 tours/min.

Selon une variante de réalisation visant à limiter la propagation des bruits aériens provenant du fonctionnement du groupe moto ventilateur, le sèche-cheveux comprend entre l'entrée d'air et la chambre de travail un conduit d'aspiration qui présente une longueur axiale supérieure ou égale au diamètre interne (Da) de la bouche d'aspiration.

Selon une caractéristique de l'invention visant à optimiser l'écoulement de l'air et à limiter la propagation des bruits aériens, le sèche-cheveux comprend entre l'entrée d'air et la chambre de travail un conduit d'aspiration annulaire avec un noyau central. On entend que la section transversale à l'axe Δ du conduit est annulaire.

Selon une autre caractéristique de l'invention, le noyau central présente un diamètre extérieur décroissant vers la chambre de travail.

Selon encore une autre caractéristique de l'invention visant également à optimiser l'écoulement de l'air, le plateau d'entraînement comprend un plot central qui présente un diamètre sensiblement égal au diamètre de la partie adjacente du noyau.

Selon une caractéristique de l'invention visant à limiter la propagation des bruits notamment d'origine vibratoire et solide, le noyau central est formé au moins en partie d'un matériau alvéolaire.

Selon une variante de réalisation de l'invention visant à limiter la propagation directe des bruits aériens engendrés par la rotation du ventilateur ainsi que le moteur électrique, le conduit d'aspiration comprend au moins un circuit de précanalisation de l'air pour faciliter la pénétration de l'air dans les aubes.

Selon une caractéristique de cette variante, le circuit de précanalisation de l'air pour faciliter la pénétration de l'air dans les aubes est formé par au moins une nervure anti-bruit sensiblement perpendiculaire à la paroi externe du conduit d'aspiration.

Selon une caractéristique de cette variante, visant à limiter les pertes de charge, chaque nervure définit un passage central dont le diamètre est supérieur ou égal au diamètre de la bouche d'aspiration.

Selon une autre caractéristique de cette variante visant également à optimiser la circulation de l'air sans nuire à la fonction piège à bruit, au moins une nervure anti-bruit présente une forme hélicoïdale.

Selon encore une autre caractéristique de l'invention, le conduit d'aspiration présente une paroi interne qui converge vers la bouche d'aspiration du rotor.

Selon une variante de l'invention visant à limiter la propagation des bruits liés au fonctionnement du moteur, la surface externe du moteur est en partie au moins entourée d'une enveloppe en matériau alvéolaire.

Selon une caractéristique de cette variante de réalisation, l'enveloppe du moteur comprend des ouvertures et/ou des canaux de ventilation.

Selon une autre variante de réalisation de l'invention visant à atténuer la transmission des vibrations du moteur en fonctionnement, le sèche-cheveux comprend au moins un berceau de suspension du moteur comprenant un collier annulaire interne de maintien du moteur et un collier annulaire externe d'appui sur un élément du corps tubulaire, le collier interne et le collier externe étant coaxiaux et liés par au moins deux bras en S qui possèdent chacun une âme élastique en arc de cercle parallèle aux colliers interne et externe. La mise en oeuvre d'un tel berceau de suspension permet d'obtenir un découplage mécanique entre le moteur et le corps tubulaire tout en assurant un centrage optimal du moteur par rapport aux éléments qui l'entourent constitutifs du corps tubulaire du sèche-cheveux.

Selon une caractéristique de l'invention, le sèche-cheveux comprend un carter tubulaire, de réception du moteur, situé en aval de la chambre de travail et maintenu dans le corps tubulaire par des ailettes radiales assurant une canalisation de l'air en provenance de la chambre de travail. Un tel carter assure alors une double fonction de maintien du moteur et de redressement du flux d'air issu de la chambre de travail de manière à transformer l'écoulement radial en sortie du ventilateur ou rotor en un écoulement axial au niveau de la sortie du corps tubulaire.

Alternativement au berceau, pour atténuer la transmission des vibrations du moteur en fonctionnement, le sèche-cheveux peut comprendre deux bagues de mousse dont l'axe est confondu avec celui du moteur et une languette prenant appui sur le rotor pour maintenir le moteur en place.

Selon une caractéristique de l'invention visant à réduire la propagation et l'émission de bruits par le corps tubulaire du sèche-cheveux, la surface extérieure du corps tubulaire est en partie au moins formée d'une épaisseur d'un matériau alvéolaire.

Le sèche-cheveux selon l'invention présente, à performances équivalentes voire supérieures, une nuisance sonore inférieure à celle des sèche-cheveux selon l'art antérieur.

Afin de quantifier de manière objective le bruit émis par un sèche-cheveux en fonctionnement et notamment vis-à-vis de la personne dont les cheveux sont séchés au moyen du sèche-cheveux, il est apparu le besoin d'un protocole de mesures fournissant des données objectives selon un mode opératoire reproductible permettant d'effectuer des comparaisons pertinentes entre différents sèche-cheveux.

Bien entendu, les différentes caractéristiques, formes et variantes de réalisation et de mise en oeuvre de l'invention peuvent être associées les unes avec les autres selon diverses combinaisons dans la mesure où elles ne sont pas incompatibles ou exclusives les unes des autres.

Brève description des dessins :

Par ailleurs diverses autres caractéristiques de l'invention ressortent de la description détaillée ci-dessous effectuée en référence aux dessins annexés qui illustrent une forme non limitative de réalisation d'un sèche-cheveux selon l'invention, ainsi qu'une forme non limitative de mise en oeuvre d'un procédé d'évaluation du bruit de fonctionnement de ce sèche-cheveux.

- La figure 1 est une coupe longitudinale schématique d'un sèche-cheveux selon l'invention.
- La figure 2 est une perspective schématique d'ensemble du groupe moto ventilateur du sèche-cheveux illustré à la figure 1.
- La figure 3 est une perspective schématique du ventilateur du groupe moto ventilateur illustré à la figure 2.
- La figure 4 est une coupe axiale du ventilateur illustrée à la figure 3.
- La figure 5 est une perspective schématique montrant une nervure antibruit destinée à être mise en place dans le conduit d'aspiration du sèche-cheveux illustré à la figure 1.
- La figure 6 est une perspective schématique montrant le moteur électrique, du groupe moto ventilateur illustré à la figure 2, associé à deux berceaux de suspension.

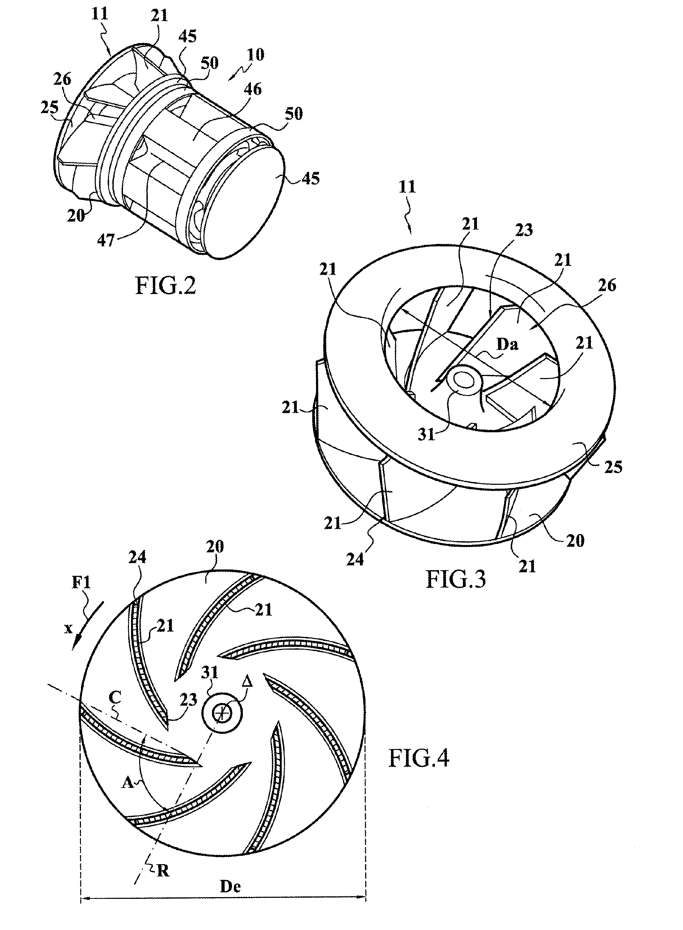

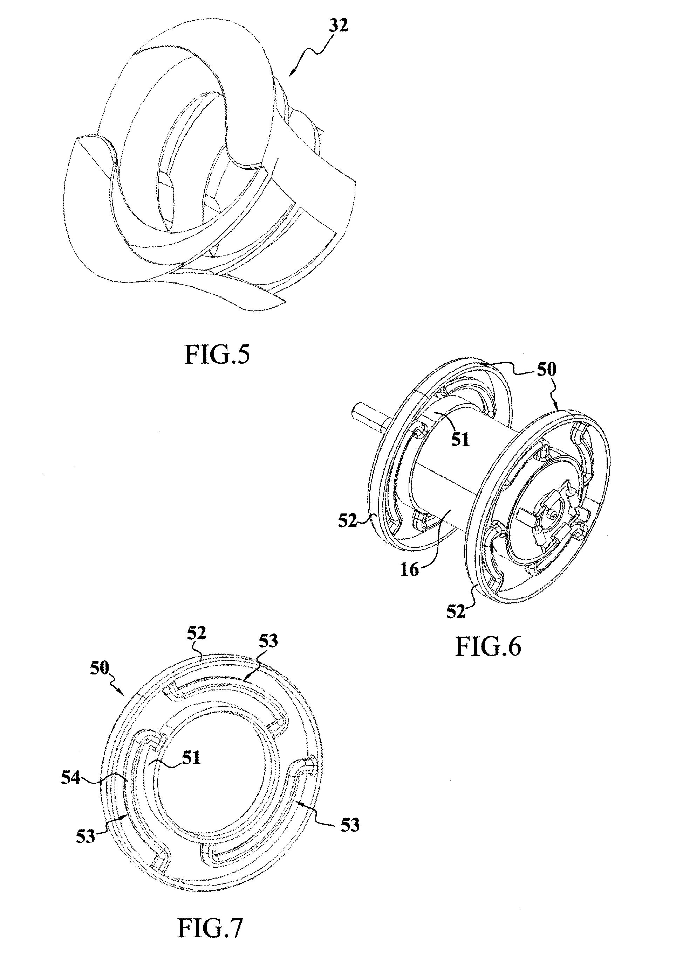

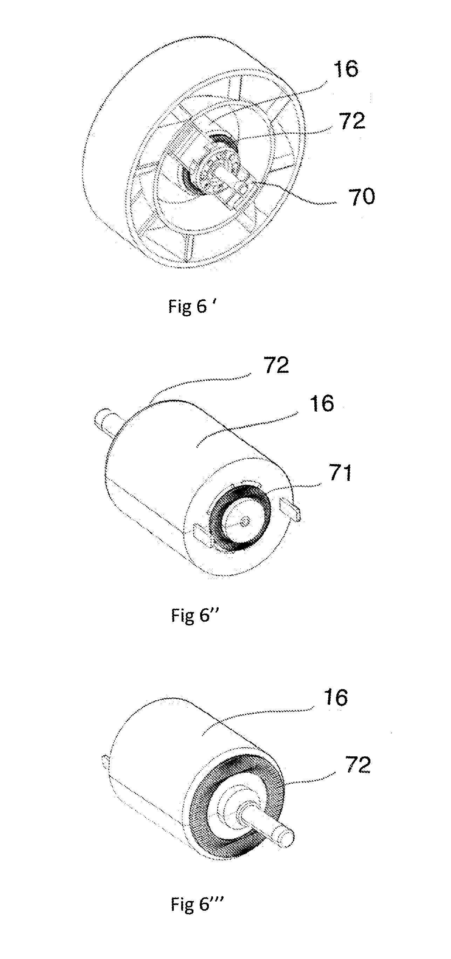

- Les figures 6', 6'' et 6''' sont des vues en perspective schématique montrant le moteur électrique, du groupe moto ventilateur illustré à la figure 2, associé à deux bagues de fixation,
- La figure 7 est une perspective schématique montrant un berceau de suspension du moteur électrique du groupe moto ventilateur.

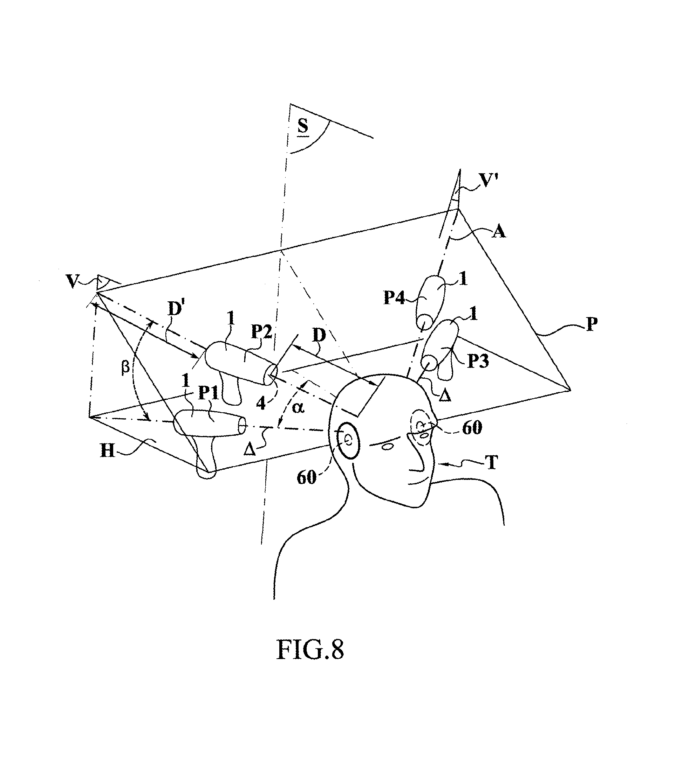

- La figure 8 est une perspective schématique illustrant un procédé de mesure du bruit émis par un sèche-cheveux.

Exposé détaillé de modes de réalisation de l'invention :

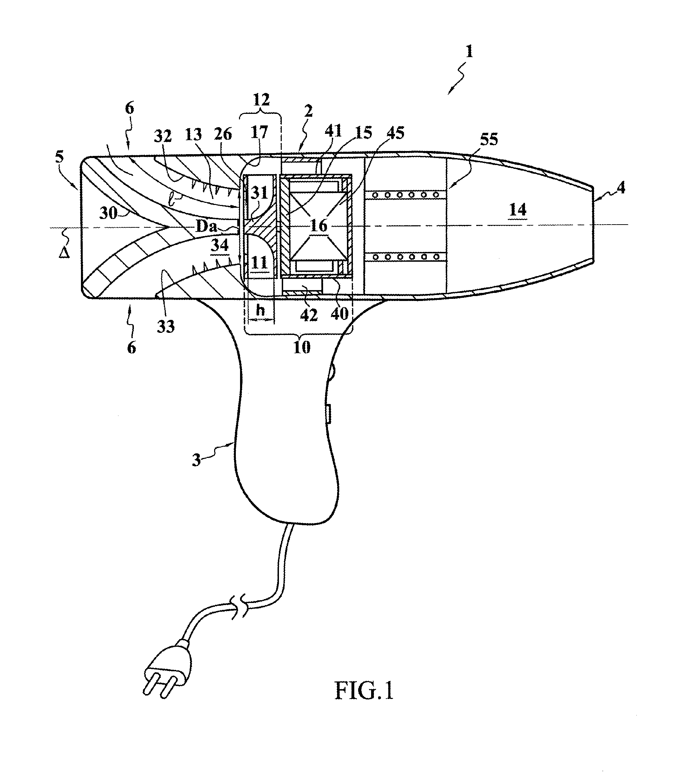

Un sèche-cheveux, selon l'invention, tel qu'illustré à la figure 1 et désigné dans son ensemble par la référence 1, comprend un corps tubulaire allongé 2 sensiblement symétrique de révolution selon un axe longitudinal Δ, sauf pour ce qui concerne une poignée 3 qui s'étend à partir du corps 2 selon une direction sensiblement perpendiculaire à l'axe Δ. Le corps tubulaire 2 peut être formé en plusieurs morceaux et, par exemple, réalisé sous la forme de deux demi-coques en matière plastique assemblées selon un plan axial passant par la poignée 3 et complétées par des pièces rapportées.

Le corps tubulaire 2 comprend, à l'avant, une extrémité ouverte 4 de sortie de l'air. La sortie 4 possède une forme sensiblement circulaire étant entendu que la sortie d'air 4 pourrait également présenter une forme d'ellipse ou oblongue. Le corps tubulaire 2 comprend en outre à proximité d'une extrémité arrière 5, opposée à la sortie 4, une entrée d'air périphérique 6 qui s'étend sur une partie du ou sur tout le pourtour du corps 2.

Afin d'assurer un soufflage d'air par la sortie 4, le sèche-cheveux 1 comprend un groupe moto ventilateur 10 disposé dans le corps tubulaire 2 entre l'entrée 6 et la sortie 4. Le groupe moto ventilateur 10 comprend un rotor 11 qui est situé dans une chambre de travail 12 raccordée, d'une part, à l'entrée d'air 6 par un conduit d'aspiration 13 et, d'autre part, à la sortie de l'air 4 par un conduit de soufflage 14. Le rotor 11 est solidaire d'un arbre d'entraînement 15 d'un moteur électrique 16 disposé à l'intérieur du conduit de soufflage 14.

Conformément à une caractéristique essentielle de l'invention, le rotor 11 forme un ventilateur centrifuge adapté pour aspirer l'air du conduit 13 dans la chambre de travail 12 parallèlement à l'axe longitudinal Δ et le refouler radialement pour rejoindre le conduit de soufflage 14 après avoir été dévié à 90° par la paroi périphérique externe 17 de la chambre de travail 12.

Selon l'exemple illustré, le rotor 11 comprend, comme le montrent les figures 2 et 3, un plateau d'entraînement 20 qui est situé du côté du moteur 16 et qui définit le plancher de la chambre de travail 12 pour la séparer du moteur 16 et du conduit de soufflage 14. Le rotor 11 comprend sept aubes 21 qui s'étendent perpendiculairement au plateau d'entraînement 20 à l'opposé du moteur 16. Les sept aubes 21 présentent, vues dans un plan axial, une section droite arquée comme cela ressort de la figure 4. Chaque aube 21 présente alors une corde C qui s'étend entre un bord d'attaque 23, situé dans une région centrale du plateau 20, et un bord de fuite 24 situé à proximité de la périphérie extérieure du plateau 20. Selon l'exemple illustré, la corde C de chaque aube 21, forme avec le plan radial R, passant par le bord d'attaque 23 correspondant, un angle A négatif non nul et, dans le cas présent, de l'ordre de -90°. Le sens positif de mesure des angles correspond au sens de rotation du rotor 11 tel qu'illustré par la flèche F1. Une telle configuration des aubes permet de réaliser un ventilateur centrifuge dit « à réaction » permettant d'obtenir en sortie de la chambre de travail des pressions plus élevées que si les aubes avaient une forme droite radicale. L'obtention d'une pression élevée en sortie de la chambre de travail 12 permet d'obtenir un flux d'air moins sensible aux pertes de charge dans le conduit de soufflage 14.

Afin d'augmenter les performances aérodynamiques du rotor 11, il est également mis en oeuvre un plafond annulaire 25 qui est solidaire des aubes 21 et qui définit en son centre une bouche circulaire d'aspiration 26. Pour que le plafond annulaire 25 n'ait pas une influence négative sur les performances du rotor, le diamètre interne Da de la bouche d'aspiration 26 est choisi pour être au moins égal à 0,6 fois le diamètre externe De du rotor 11.

Afin d'être intégrable dans un corps de sèche-cheveux de dimensions raisonnables, le rotor pourra être choisi de manière à avoir un diamètre externe De inférieur à 70 mm et, par exemple, de l'ordre de 65 mm.

Toujours dans le sens d'une optimisation aérodynamique du rotor et dans le cas où celui-ci est destiné à fonctionner à des vitesses de rotation comprises entre 7000 et 12 000 tr/min, les aubes 21 seront dimensionnées pour présenter une hauteur axiale h, mesurée parallèlement à l'axe Δ, comprise entre 0,30 et 0,5 fois le diamètre externe De du rotor. Dans le cas d'un rotor dont le diamètre externe est de l'ordre de 65 mm, les aubes 21 seront réalisées de manière à posséder une hauteur h comprise entre 20 mm et 30 mm, préférentiellement entre 22 et 30mm. Afin de limiter les bruits aériens et les vibrations, la vitesse de rotation d'un tel rotor 11 sera, de préférence, choisie pour être inférieure ou égale à 10 000 tr/min.

Afin de limiter la propagation directe des bruits hors du conduit d'aspiration 13, ce dernier sera réalisé de manière à présenter une longueur axiale l supérieure ou égale au diamètre interne Da de la bouche d'aspiration 26. On entend par « longueur axiale l » illustrée en figure 1 par une flèche courbée, la longueur correspondant en fonctionnement à la longueur de pavillon parcourue par le fluide.

Afin d'optimiser plus encore l'atténuation des bruits, le conduit d'aspiration 13 comprend un noyau central 30 qui lui confère une forme annulaire depuis l'entrée d'air 6 jusqu'à, sensiblement, la chambre de travail 12. La surface du noyau 30 délimitant le conduit d'aspiration 13 présente selon l'exemple illustré une forme à symétrie de révolution d'axe Δ avec une génératrice concave de sorte que le diamètre extérieur du noyau central 30 décroît vers la chambre de travail 12. Afin d'assurer une continuité aéraulique avec le noyau 30, le plateau d'entraînement 20 comprend un plot central 31 qui présente un diamètre sensiblement égal au diamètre de la partie adjacente du noyau 30. L'effet absorbeur de bruit du noyau 30 peut encore être renforcé en réalisant le noyau en partie au moins en un matériau alvéolaire tel que de la mousse de polyuréthane à base de polyester.

Le noyau 30 pourra alors être formé par une coque rigide remplie en partie au moins dudit matériau alvéolaire. Le noyau peut aussi être réalisé sous la forme d'une pièce moulée en ce matériau alvéolaire.

Selon l'exemple illustré, la propagation vers l'extérieur des bruits du conduit d'aspiration 13 est également limitée par la présence d'au moins un circuit de précanalisation pour faciliter la pénétration de l'air dans les aubes (dépendant du sens de rotation du rotor). Ce circuit de précanalisation de l'air (32, 33) est formé par au moins une nervure antibruit 32 sensiblement perpendiculaire à la paroi externe 33 du conduit d'aspiration 13. Selon l'exemple illustré, la nervure antibruit 32 est constituée par une pièce rapportée de forme hélicoïdale comme le montre la figure 5. De manière à ne pas avoir un effet pénalisant d'un point de vue aéraulique, la nervure 32 pourra être réalisée de manière à définir un passage central 34 libre dont le diamètre externe est supérieur ou égal au diamètre Da de la bouche d'aspiration 26. Bien entendu, le passage central 34 pourrait également avoir un diamètre externe inférieur ou égal à celui de la bouche d'aspiration 26, auquel cas le canal ou conduit d'aspiration 13 sera réalisé de manière à présenter au niveau de la bouche d'aspiration 26 un diamètre supérieur ou égal au diamètre interne Da de cette dernière. Il pourra en outre être remarqué que, selon l'exemple illustré, la paroi externe 33 du conduit d'aspiration 13 converge vers la bouche d'aspiration 26.

De manière à limiter la propagation des bruits et vibrations du moteur 16 en fonctionnement, le sèche-cheveux 1 comprend un carter tubulaire 40 à l'intérieur duquel le moteur 16 est confiné. Le carter tubulaire 40 présente une forme cylindrique de révolution d'axe Δ. Le carter tubulaire 40 est centré à l'intérieur du conduit de soufflage 14 par une ceinture coaxiale 41 en appui contre la paroi interne du conduit de soufflage 14. La ceinture 41 et le carter tubulaire 40 sont liés l'un à l'autre par des ailettes radiales 42 qui aménagent un espace de passage pour l'air entre le carter 40 et la ceinture 41 et qui canalisent l'air en provenance de la chambre de travail 12 pour s'opposer à son éventuel mouvement tourbillonnaire.

Le confinement du moteur 16 dans le carter tubulaire 40 est assuré au moyen de deux disques 45, visibles figures 1 et 2, réalisés en un matériau alvéolaire tel qu'une mousse de polyuréthane à base de polyester.

Selon l'exemple illustré et comme le montre plus particulièrement la figure 2, la surface externe du moteur 16 est en outre recouverte ou entourée d'une épaisseur 46 de matériau alvéolaire. L'enveloppe du moteur, formée par les disques 45 et l'épaisseur 46, comprend de préférence des ouvertures et/ou canaux de ventilation 47 de manière à permettre une évacuation de la chaleur du moteur 16 et ainsi lui assurer une durée de vie satisfaisante.

Afin de limiter la propagation des vibrations du moteur 16 au reste du corps tubulaire 2, le moteur 16 est maintenu dans le carter 40 par au moins un et, selon l'exemple illustré, deux berceaux de suspension 50, mieux visibles à la figure 6, qui assurent un découplage mécanique entre le moteur 16 et le carter 40. Chaque berceau de suspension 50 comprend, comme cela ressort de la figure 7, un collier annulaire interne 51 adapté de manière serrée autour du moteur 16. Chaque berceau 50 comprend en outre un collier annulaire externe 52 d'appui sur la paroi interne du carter 40. Il doit être remarqué qu'au sens de l'invention, le carter 40 est un élément constitutif du corps tubulaire 2 même s'il est constitué par une pièce rapportée dans ce dernier. Le collier annulaire interne 51 est relié au collier externe 52 par au moins deux et, selon l'exemple illustré, trois bras 53 qui présentent une forme générale en S. Chaque bras possède une âme élastique 54 qui est parallèle aux colliers 51 et 52 et qui assure l'amortissement des vibrations pendant le fonctionnement du moteur 16.

Alternativement, comme illustré en figures 6',6" et 6''', pour atténuer la transmission des vibrations du moteur en fonctionnement, la fixation du moteur sur le support stator du sèche cheveux peut être faite aux deux extrémités du moteur par deux bagues-coussinets 71, 72 de mousse agencées de chaque côté du moteur dont l'axe est confondu avec celui du moteur 16 et par une languette 70 légèrement déformée et prenant appui sur le rotor 11 pour maintenir le moteur 16 en place et assurer vibration.

Le sèche-cheveux 1 comprend en outre en aval du groupe moto ventilateur 10 des moyens 55 de chauffage électrique de l'air soufflé. Les moyens de chauffage 55 peuvent être réalisés de toute façon appropriée et par exemple sous la forme d'une résistance électrique chauffante maintenue par des ailettes radiales réalisées en matériaux isolants tels que par exemple des feuilles de mica.

Afin de contribuer à l'amortissement du bruit de fonctionnement du sèche-cheveux 1, certaines parties au moins de la surface externe du corps pourront également être réalisées en matériau alvéolaire tel que une mousse de polyuréthane à base de polyester.

Le sèche-cheveux 1, selon l'invention, ainsi constitué fonctionne, à performance de chauffage et de débit d'air équivalente, en émettant moins de bruit que les sèche-cheveux selon l'antérieur.

Afin de bénéficier d'une base de comparaison objective rendant compte des performances sonores d'un sèche-cheveux tant en ce qui concerne la personne tenant le sèche-cheveux que la personne dont les cheveux sont séchés ou encore en ce qui concerne l'utilisateur se séchant seul les cheveux, l'invention propose un procédé de mesure permettant de quantifier objectivement la pression acoustique subie par l'environnement.

Afin de quantifier le bruit reçu par la personne dont les cheveux sont séchés au moyen du sèche-cheveux, il est proposé de mettre en oeuvre une tête humaine factice T comme illustrée à la figure 8. La tête factice T est équipée de deux de microphones 60 l'un disposé dans l'oreille droite et l'autre dans l'oreille gauche de la tête T. Les microphones 60 sont reliés à une unité de mesure et de traitement, non représentée, permettant de mesurer la pression acoustique au niveau de chacun des microphones et d'effectuer différents calculs sur les valeurs mesurées.

Pour réaliser une première mesure dB1 le sèche-cheveux 1 en fonctionnement est placé dans une première position P1 d'un côté arrière, par exemple droit, de la tête T avec l'axe longitudinal Δ contenu dans le plan horizontal H passant par les micros 60 et faisant avec un plan sagittal S, de symétrie de la tête T, un angle α compris entre 30° et 50° et, par exemple, égal à 45°.

Pour réaliser une deuxième mesure dB2, le sèche-cheveux 1 en fonctionnement est relevé jusqu'à une deuxième position P2 de manière que sa sortie soit dirigée vers le bas en direction de la tête T. Dans cette deuxième position P2, l'axe longitudinal Δ est situé dans un plan incliné P faisant un angle β avec le plan horizontal H qu'il coupe au niveau de la droite passant par les micros 60. L'angle β possède une valeur comprise entre 30° et 50° et par exemple égal à 45°. Dans la deuxième position P2, l'axe longitudinal Δ forme le même angle α que dans la position P1 avec le plan sagittal S.

Il est également réalisé une troisième mesure dB3 dans une troisième position P3 symétrique de la première position P1 par rapport au plan sagittal S. Il est enfin réalisé une quatrième mesure dB4 dans une quatrième position P4 symétrique de la deuxième position P2 par rapport au plan sagittal S. Il peut être remarqué que dans les positions P1 et P2, l'axe longitudinal Δ est compris dans un même plan vertical V tandis que dans les positions P3 et P4 l'axe longitudinal Δ est compris dans un même plan vertical V' symétrique du plan vertical V par rapport au plan sagittal S.

Il doit être noté que dans chacune des positions de mesure P1 à P4, la sortie 4 est placée à une distance D, mesurée le long de l'axe Δ, de la surface externe de la tête T comprise entre 5 cm et 20 cm et par exemple égale à 10 cm.

Chaque valeur dB1 à dB4 correspond à la somme des mesures de pression acoustique des deux micros 60 pour chaque position correspondante.

Afin de donner une note synthétique il peut être réalisé une moyenne MdB des mesures dB1 à dB2 ou des mesures dB1 à dB4.

Ainsi dans le cas d'un sèche-cheveux selon l'invention présentant un débit d'environ 68m3/h-avec une puissance de chauffage d'environ 1800W la moyenne MdB a une valeur d'environ 69dB tandis que pour un sèche-cheveux selon l'art antérieur présentant le même débit et la même puissance de chauffage la moyenne MdB a une valeur d'environ 75dB.

L'évaluation du bruit engendré par le sèche-cheveux en fonctionnement peut être complétée en mesurant la pression acoustique dB5 en un point situé sur l'axe longitudinal Δ à l'arrière du sèche-cheveux à une distance D' comprise entre 15cm et 30 cm et par exemple égale à 20 cm. Cette mesure dB5 rend compte du bruit subi par un utilisateur du sèche-cheveux 1 qui sèche les cheveux d'une autre personne.

Selon l'exemple décrit précédemment et illustré aux figures, les éléments constitutifs du corps tubulaire tels que par exemple l'enveloppe extérieure du corps, le carter 40, le noyau 30 sont des éléments indépendants. Toutefois, ces différents éléments pourraient faire partie intégrante des deux coques qui constituent l'enveloppe. De même selon l'exemple illustré le canal de soufflage se resserre au niveau de la sortie 4. Bien entendu une telle configuration n'est pas nécessaire à la réalisation d'un sèche-cheveux selon l'invention et le canal de soufflage 14 pourrait présenter une section constante sur toute sa longueur.

Bien entendu diverses autres modifications peuvent être apportées au sèche-cheveux selon l'invention dans le cadre des revendications annexées.

## Revendications

1. Procédé d'évaluation du bruit émis par un sèche-cheveux d'axe longitudinal Δ avec une sortie vers l'avant, procédé comprenant les étapes suivantes :

   - mise en oeuvre d'une tête humaine factice (T) avec deux microphones (60), l'un placé au niveau de l'oreille gauche et l'autre au niveau de l'oreille droite de la tête factice de chaque côté du plan sagittal S, de symétrie de la tête,
   - placement du sèche-cheveux en fonctionnement d'un côté arrière de la tête avec la sortie orientée vers la tête (T) et située à une distance (D) de la tête comprise entre 5 cm et 20cm, l'axe longitudinal (Δ) du sèche-cheveux étant compris dans un plan vertical (V) faisant un angle α compris entre 30° et 50° avec le plan sagittal S, de symétrie de la tête T, et:

      - positionnement de l'axe longitudinal (Δ) du sèche-cheveux dans un plan horizontal (H) passant par les micros, puis mesure de la pression acoustique gauche et droite par les microphones et calcul de la moyenne dB1 de ces deux mesures,
      - positionnement de l'axe longitudinal (Δ) du sèche-cheveux avec la sortie orientée vers le bas, dans un plan incliné (P) faisant avec le plan horizontal un angle (β) compris entre 30° et 50°, puis mesure de la pression acoustique gauche et droite par les microphones et calcul de la moyenne dB2 de ces deux mesures.

2. Procédé d'évaluation selon la revendication 1, **caractérisé en ce qu'**il comprend en outre les étapes suivantes :

   - placement du sèche-cheveux en fonctionnement de l'autre côté arrière de la tête avec la sortie orientée vers la tête et située à la distance (D) de la tête, l'axe longitudinal (Δ) du sèche-cheveux étant compris dans un plan vertical (V') symétrique du plan (V) par rapport au plan sagittal (S) de symétrie de la tête T:

   - positionnement de l'axe longitudinal du sèche-cheveux dans le plan horizontal (H) puis mesure de la pression acoustique gauche et droite par les microphones (60) et calcul de la moyenne dB3 de ces deux mesures,
   - positionnement de l'axe longitudinal du sèche-cheveux avec la sortie orientée vers le bas, dans le plan incliné P puis mesure de la pression acoustique gauche et droite par les microphones et calcul de la moyenne dB4 de ces deux mesures.

3. Procédé d'évaluation selon la revendication 1 ou 2, **caractérisé en ce qu'**il comprend une étape de calcul de la moyenne des valeurs dB1 et dB2 ou de la moyenne de dB1, dB2, dB3 et dB4.

4. Procédé d'évaluation selon l'une des revendications 1 à 3, **caractérisé en ce qu'**il comprend une étape de mesure de la pression acoustique dB5 en un point situé sur l'axe longitudinal (Δ) à l'arrière du sèche-cheveux à une distance (D') comprise entre 15 cm et 30 cm.

## Patentansprüche

1. Verfahren zur Bewertung der Lärmemission eines Haartrockners mit Längsachse Δ und einer Öffnung vorne, wobei das Verfahren zwei Schritte umfasst:

   - Einsatz eines Kunstkopfes (T) mit zwei Mikrofonen (60), eins auf Höhe des linken Ohrs und das andere auf Höhe des rechten Ohrs des Kunstkopfes, auf jeder Seite der Sagittalebene S, der Symmetrie des Kopfes,
   - Platzierung des Haartrockners in Betrieb auf einer Seite hinter dem Kopf mit der Öffnung in Richtung des Kopfes (T) und in einem Abstand (D) zum Kopf zwischen 5 cm und 20 cm, wobei sich die Längsachse (Δ) des Haartrockners in einer vertikalen Ebene (V) befindet, die in einem Winkel α zwischen 30° und 50° zur Sagittalebene S steht, der Symmetrie des Kopfes T, und:

      - Positionierung der Längsachse (Δ) des Haartrockners in einer Horizontalebene (H), die durch die Mikrofone verläuft, dann Messung des Schalldrucks links und rechts durch die Mikrofone und Berechnung des Mittelwerts dB1 aus diesen zwei Messungen,

- Positionierung der Längsachse (Δ) des Haartrockners mit der Öffnung nach unten, in einer schiefen Ebene (P), die mit der horizontalen Ebene einen Winkel (β) zwischen 30° und 50° bildet, dann Messung des Schalldrucks links und rechts durch die Mikrofone und Berechnung des Mittelwerts dB2 aus diesen zwei Messungen.

2. Bewertungsverfahren nach Anspruch 1, **dadurch gekennzeichnet, dass** es des Weiteren die folgenden Schritte umfasst:

- Platzierung des Haartrockners in Betrieb auf der anderen Seite hinter dem Kopf mit der Öffnung in Richtung des Kopfes und in einem Abstand (D) zum Kopf, wobei sich die Längsachse (Δ) des Haartrockners in einer vertikalen Ebene (V') befindet, die symmetrisch zur Ebene (V) in Relation zur Sagittalebene S steht, der Symmetrie des Kopfes T:

- Positionierung der Längsachse des Haartrockners in der Horizontalebene (H), dann Messung des Schalldrucks links und rechts durch die Mikrofone (60) und Berechnung des Mittelwerts dB3 aus diesen zwei Messungen,
- Positionierung der Längsachse des Haartrockners mit der Öffnung nach unten, in einer schiefen Ebene (P), dann Messung des Schalldrucks links und rechts durch die Mikrofone und Berechnung des Mittelwerts dB4 aus diesen zwei Messungen.

3. Bewertungsverfahren nach Anspruch 1 oder 2, **dadurch gekennzeichnet, dass** es einen Schritt zur Berechnung des Mittelwerts aus den Werten dB1 und dB2 oder des Mittelwerts aus dB1, dB2, dB3 und dB4 umfasst.

4. Bewertungsverfahren nach einem der Ansprüche 1 bis 3, **dadurch gekennzeichnet, dass** es einen Schritt zur Messung des Schalldrucks dB5 in einem Punkt auf der Längsachse (Δ) hinten am Haartrockner bei einem Abstand (D') zwischen 15 cm und 30 cm umfasst.

**Claims**

1. A method for evaluating the noise produced by a longitudinal axis (Δ) hair dryer with an outlet towards the front. The method comprises the following steps:

- implementation of a dummy human head (T) with two microphones (60), one placed at the left ear and the other at the right ear of the dummy head on each side of the sagittal plane of symmetry (S) of the head,
- placement of the hair dryer in operation at one side of the rear of the head with the outlet directed towards the head (T) and situated at a distance (D) of between 5 cm and 20 cm from the head, with the longitudinal axis (Δ) of the hair dryer being in a vertical plane (V) forming an angle α of between 30° and 50° with the sagittal plane of symmetry (S) with the head (T), and:

- positioning the longitudinal axis (Δ) of the hair dryer in a horizontal plane (H) passing through the microphones, and then measuring the left and right sound pressure with the microphones and calculating the average dB1 of these two measurements,
- positioning the longitudinal axis (Δ) of the hair dryer with the outlet facing downward in an inclined plane (P) forming an angle (β) of between 30° and 50° with the horizontal plane, and then measuring the left and right sound pressure with the microphones and calculating the average dB2 of these two measurements.

2. Evaluation method according to claim 1, **characterised in that** it comprises the following additional steps:

- placement of the hair dryer in operation at the other side of the rear of the head with the outlet directed towards the head and situated at a distance (D) from the head, with the longitudinal axis (Δ) of the hair dryer in a vertical plane (V') of the symmetrical plane (V) relative to the sagittal plane of symmetry (S) of the head (T):

- positioning the longitudinal axis of the hair dryer in the horizontal plane (H), and then measuring the left and right sound pressure with the microphones (60) and calculating the average dB3 of these two measurements,
- positioning the longitudinal axis of the hair dryer with the outlet facing downward in an inclined plane (P), and then measuring the left and right sound pressure with the microphones and calculating the average dB4 of these two measurements.

3. Evaluation method according to claim 1 or 2, **characterised in that** it comprises a step for calculating the average of values dB1 and dB2, or the average of dB1, dB2, dB3 and dB4.

4. Evaluation method according to any one of claims 1 to 3, **characterised in that** it comprises a step for measuring sound pressure dB5 at a point on the longitudinal axis (Δ) to the rear of the hair dryer at a distance (D') of between 15 cm and 30 cm.

FIG.1

FIG.2

FIG.3

FIG.4

FIG.5

FIG.6

FIG.7

Fig 6 '

Fig 6''

Fig 6'''

FIG.8

**EP 2 641 067 B1**

## RÉFÉRENCES CITÉES DANS LA DESCRIPTION

**Documents brevets cités dans la description**

- EP 1692962 A1